# EUROPEAN PATENT SPECIFICATION

(11) **EP 2 466 181 B1**
(45) Date of publication and mention of the grant of the patent: **09.09.2015**
(21) Application number: 10194960.0
(22) Date of filing: 14.12.2010
(51) Int. Cl.: F16L 21/00, F16L 17/06, F16L 39/00

(54) **Fluid coupler**
Kupplung für Fluide
Coupleur de fluide

(43) Date of publication of application: 20.06.2012
(73) Proprietor: Caterpillar Work Tools B. V., 5232 BJ 's-Hertogenbosch (NL)
(72) Inventor: Luyendijk, Dirk Jacobus, 5473 RE Heeswijk-Dinther (NL); van Amelsfoort, Eduard Cornelis Maria Henricus C., 5017 CG Tilburg (NL); Jongebloed, Holger, 26389 Wilhelmshaven (DE)
(74) Representative: Modiano, Micaela Nadia

(56) References cited:
- BE-A- 434 043
- US-A- 1 117 762
- US-A- 1 830 674
- US-A- 2 712 458
- US-A- 3 195 930
- US-A- 4 296 952
- US-A- 4 709 726
- US-A- 5 118 140

## Description

### Technical Field

This disclosure relates to a device and a method for alignment of male and female fluidconnectors for engagement of these components, in particular for an engagement which allows for a displacement between the male and female fluidconnectors.

### Background

Conventional male and female fluidconnectors may be used to sealingly join pressurised fluid lines. When engaged, the corresponding fluidconnectors may automatically enable the fluid and/or fluid pressure to be transmitted, through a mutual passageway formed at engagement. These corresponding fluidconnectors may reliably maintain high fluid pressure after repeated engagement and disengagement operations.

The corresponding fluidconnectors may need to be suitably aligned before their engagement. Alignment of the fluidconnectors may be necessary in order to establish a reliable and leak free connection. Proper alignment of the corresponding connectors prior to engagement may also increase the service life of the components.

A fluidconnector may have to be aligned with high accuracy to avoid excessive wear of the internal components which may eventually result in a leaking connection. When fluidconnectors are coupled in an automated environment, the final alignment of the fluidconnectors during the engagement process may be critical since the connecting force may often be much higher compared to a manual connect system. Hence, any misalignment in combination with the high connecting force may cause a deterioration of the fluidconnectors.

A cause for fluidconnector misalignment may be changes in temperature. A significant temperature difference may be present between a fluidconnector and a corresponding fluid connector. As a result of thermal material expansion, the fluidconnectors may no longer be aligned properly.

A series of fluidconnectors may be mounted in a mounting plate to ensure simultaneous engagement of the fluidconnectors for different hydraulic functions. Such a mounting plate may be used on either one or on both of a coupling and plug side of the fluidconnector configuration. As a result of stacked-up tolerances, the positions of corresponding fluidconnectors may be slightly misaligned. This misalignment may not be avoided without very accurate machining of the fluidconnectors, at very high cost.

The foregoing examples of misalignment may not be compensated until the fluidconnectors start to engage.

U.S. patent no. 4,709,726 discloses a hydraulic coupler for interconnecting subsea fluid lines and may have a metallic seal between the male and female portions. The C-shaped metallic seal may be radially compressed between the female and male coupler bodies, so that axial movement between these bodies does not effect sealing effectiveness. A floating retainer ring may be housed within the female body by a fixed retainer ring which may allow for radial misalignment between the coupling halves. The floating retainer ring may become centered with respect to the male coupling body. A metallic face seal may provide sealing engagement between the floating and fixed retainers. Both axial and radial deviation between the coupling bodies may be permissible, so that the coupling may reliably seal fluid after repeated coupling and uncoupling operations.

The present disclosure is directed, at least in part, to improving or overcoming one or more aspects of the prior art couplers.

### Brief Summary of the Invention

In a first aspect, the present disclosure describes a fluid coupler for aligned engagement of fluid connectors according to claim 1.

In a second aspect, the present disclosure describes a method of aligned engagement of fluid connectors according to claim 11.

### Brief Description of the Drawings

The foregoing and other features and advantages of the present disclosure will be more fully understood from the following description of various embodiments, when read together with the accompanying drawings, in which:
Fig. 1 is a cross-sectional view of a fluid coupler according to an embodiment of the present disclosure;
Fig. 2 is a cross-sectional view of a fluid coupler of Fig. 1 and a corresponding fluid coupler prior to engagement according to an embodiment of the present disclosure;
Fig. 3 is an isometric view of a fluid coupler of Fig. 1 according to an embodiment of the present disclosure;
Fig. 4 is a bottom view of the corresponding coupler of Fig. 2 according to an embodiment of the present disclosure;
Figs. 5a - 5c are sectional views of a guiding pin and a bushing in the fluid coupler and the corresponding coupler at various stages of engagement according to an embodiment of the present disclosure.

### Detailed Description

This disclosure generally relates to the alignment of male and female fluidconnectors, supported in respective couplers, for engagement of these components and in particular an engagement which compensates for a misalignment between the male and female fluidconnectors.

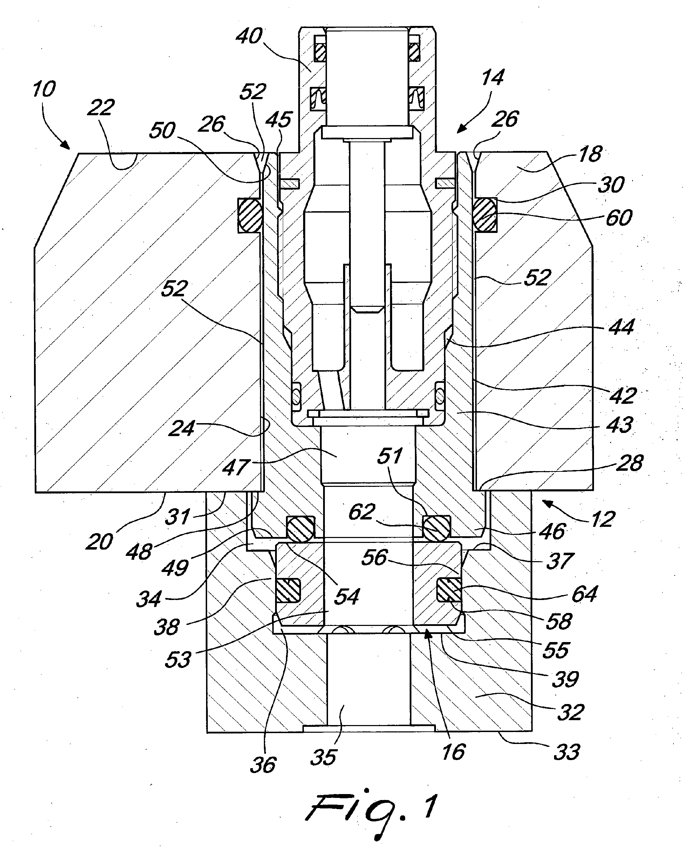

Fig. 1 illustrates a fluid coupler **10** which comprises a support member **12,** a first connector member **14** and a piston member **16.** The first connector member **14** is housed in the support member **12.** The piston member **16** is axially slidable in the support member **12.**

In an embodiment, the support member **12** may comprise a cartridge **18** and a mounting plate **32.** The cartridge **18** and the mounting plate **32** may be mutually connected. The cartridge **18** may be rigidly mounted to the mounting plate **32.**

The cartridge **18** may have a configuration for engaging the mounting plate **32** and for accommodating the first connector member **14.** The cartridge **18** may be formed as a block and may have a first cartridge side **20** and a second cartridge side **22.** The first cartridge side **20** and the second cartridge side **22** may be parallel. The first cartridge side **20** may be in contact with a surface of the mounting plate **32** when cartridge **18** and mounting plate **32** may be mutually connected. The second cartridge side **22** may engage to a surface of a corresponding mounting plate of a corresponding coupler.

The cartridge **18** may include a channel **24.** The channel **24** may be annular and may extend through cartridge **18.** The channel **24** may have openings on the first cartridge side **20** and the second cartridge side **22.** The longitudinal axis of the channel **24** may be perpendicular to the first cartridge side **20** and the second cartridge side **22.** In the fluid coupler **10,** the first connector member **14** may be substantially or completely accommodated within the channel **24.**

The edge of the opening of channel **24** at the second cartridge side **22** may be inclined away from the longitudinal axis of the channel **24** to form an inclined edge **26.** The inclined edge **26** may encircle the opening of the channel **24** at the second cartridge side **22.**

In an embodiment, the cartridge **18** may comprise a groove **30.** The groove **30** may be cut into the cartridge **18.** The groove **30** may be positioned at channel **24** such that a side opens to channel **24.** The groove **30** may be concentric with channel **24** and may be positioned at any point along the channel **24.** In an embodiment, the groove **30** may be positioned adjacent the opening of the channel **24** at the second cartridge side **22.** In an embodiment, the groove **30** may be positioned adjacent the inclined edge **26.**

In an embodiment, the cartridge **18** may comprise a plurality of grooves **30** at channel **24** such that each groove has a side that opens to channel **24.**

The opening of the channel **24** at first cartridge side **20** may have an abutment edge **28.** The abutment edge **28** may be configured to engage the first connector member **14.** The abutment edge **28** may be orthogonal to the longitudinal axis of the channel **24.** In an embodiment the abutment edge **28** may encircle the opening of channel **24** at first cartridge side **20.** In an alternative embodiment, abutment edge **28** may be disposed from the opening of channel **24** and within the channel **24.**

The mounting plate **32** may be configured for engaging the cartridge **18** and for accommodating the first connector member **14.** The mounting plate **32** may be formed as a block and may have a first plate side **31** and a second plate side **33.** The first plate side **31** and the second plate side **33** may be parallel. In the fluid coupler **10,** the first plate side **31** may contact the first cartridge side **20** of the cartridge **18.**

The mounting plate **32** may include a through cavity which may be formed by an abutment chamber **34,** a fluid chamber **36** and a fluid passage **35.** The cavity may have openings on the first plate side **31** and the second plate side **33.** The abutment chamber **34** may have an opening at the first plate side **31.** The fluid passage **35** may have an opening at the second plate side **33.** The opening of the abutment chamber **34,** at the first plate side **31,** may be greater than the opening of the fluid passage **35,** at the second plate side **33.**

In an embodiment, each of the abutment chamber **34,** the fluid chamber **36** and the fluid passage **35** may have an annular geometry. The diameter of the abutment chamber **34** may be greater than the diameter of the fluid chamber **36** and diameter of the fluid passage **35.** The diameter of the fluid chamber **36** may be greater than diameter of the fluid passage **35.**

The longitudinal axis of the cavity may be perpendicular to the first plate side **31** and the second plate side **33.** The longitudinal axis of the cavity may be continuous with the longitudinal axis of the channel **24** when the cartridge **18** is mounted to the mounting plate **32** to form a common longitudinal axis in the support member **12.**

In the assembled support member **12,** the abutment edge **28** may extend over the opening of the abutment chamber **34.** The abutment edge **28** may be substantially perpendicular to the enclosing wall of the abutment chamber **34.**

An abutment ledge **37** may extend from the enclosing wall of the abutment chamber **34,** substantially transverse to the longitudinal axis of the cavity of the mounting plate **32,** into the cavity of the mounting plate **32.** In the assembled support member **12,** abutment ledge **37** may be opposite and substantially parallel to the abutment edge **28.**

The enclosing wall of the fluid chamber **36** may extend further into the cavity of the mounting plate **32** than the enclosing wall of the abutment chamber **34.** A piston guide **38** may be formed on the enclosing wall of the fluid chamber **36.** The piston guide **38** may be a protrusion into the fluid chamber **36.** The piston guide **38** may be a convex protrusion with a flattened apex.

In an embodiment, the piston guide **38** may be formed as a continuous ring on the enclosing wall of the fluid chamber **36** and may have a raised central portion and sloping sides inclined away from the longitudinal axis of the cavity in the mounting plate **32.** The apex of the central raised portion of the piston guide **38** may be flattened.

A fluid chamber ledge **39** may extend from the enclosing wall of the fluid chamber **36,** substantially transverse to the longitudinal axis of the cavity in the mounting plate **32,** into the cavity of the mounting plate **32.** The fluid chamber ledge **39** may be substantially parallel to the abutment ledge **37.** The enclosing wall of the fluid passage **35** may extend further into the cavity in the mounting plate **32** than the enclosing wall of the fluid chamber **36.**

In the assembled support member **12,** the abutment chamber **34** and channel **24** may be contiguous to mutually house the first connector member **14.**

The first connector member **14** may comprise a fluidconnector **40** and a fluidconnector sleeve **42.** The fluidconnector sleeve **42** may be configured to receive fluidconnector **40.**

The fluidconnector sleeve **42** may comprise a body portion **43** having a central axis. The body portion **43** may include a compartment **44** which may be configured to receive and rigidly hold fluidconnector **40.**

The compartment **44** may have an inlet **45** at an end. The fluidconnector **40** may be inserted into the compartment **44** and extracted from the compartment through the inlet **45.** The fluidconnector **40** may be assembled into fluid coupler **10** and disassembled from the fluid coupler **10** without removing the fluidconnector sleeve **42.** The servicing and/ or replacement of the fluidconnector **40** may be performed through the extraction of only the fluidconnector **40.** The compartment **44** may have a treaded portion to rigidly mount the fluidconnector **40.**

The body portion **43** of fluidconnector sleeve **42** may include a conduit **47** extending from the compartment **44** and along the direction of the central axis of the body portion **43.** The conduit **47** may extend to the end of the body portion **43** opposite the inlet **45.** The conduit **47** may have an opening at the end of the body portion **43** opposite the inlet **45.** The compartment **44** and the conduit **47** may form a continuos passage through the body portion **43.** In the first connector member **14,** having the fluidconnector **40** inserted into the fluidconnector sleeve **42,** a fluid channel in the fluidconnector **40** may be contiguous with the conduit **47** to form a continuos fluid passage through the first connector member **14.**

The fluidconnector sleeve **42** may comprise a flange portion **46** at the end opposite inlet **45.** The flange portion **46** may extend in a direction substantially transverse to the central axis of the body portion **43** away from the conduit **47.** In an embodiment, the flange portion **46** may be formed as a continuous ring around the body portion **43.** In an alternative embodiment, the flange portion **46** may be formed as a discontinuous ring around the body portion **43.**

The flange portion **46** may have an abutment seat **48** formed at a side thereof. The abutment seat **48** may be configured to engage the cartridge **18.**

The body portion **43** and flange portion **46** may have a thrust surface **49** at the end opposite inlet **45.** The thrust surface **49** may be opposite and parallel to the abutment seat **48.** The thrust surface **49** may be transverse to the central axis of the body portion **43.** The conduit **47** of body portion **43** may have an opening at thrust surface **49.** The inner perimeter of the thrust surface **49** may delimit the opening of conduit **47.** The thrust surface **49** may be configured to engage a surface of the piston member **16.**

The body portion **43** may have a bevelled edge **50** at the end provided with the inlet **45.** The bevelled edge **50** may be inclined toward the central axis of the body portion **43.** The bevelled edge **50** may form a ring around the body portion **43** adjacent the inlet **45.**

In an embodiment, the body portion **43** may comprise a slot **51.** The slot **51** may be cut into the thrust surface **49** of body portion **43.** The slot **51** may be positioned at thrust surface **49** such that a side has an opening at thrust surface **49.** The slot **51** may be concentric with conduit **47** and may be disposed at any position along the thrust surface **49** which may engage piston member **16.** In an embodiment, the slot **51** may be positioned adjacent the inner perimeter of the thrust surface **49** which may delimit the opening of conduit **47.**

In an embodiment, the fluidconnector **40** and the fluidconnector sleeve **42** may be integral so that the first connector member **14** may be a monolithic structure. The monolithic first connector member **14** may include the body portion **43.**

In the fluid coupler **10,** the first connector member **14** is not mounted or joined to the support member **12.** The first connector member **14** is free to move within the channel **24** and the abutment chamber **34.**

The fluid coupler **10** may comprise an alignment gap **52** between the support member **12** and the first connector member **14** for floating movement of the first connector member **14.** The alignment gap **52** may be formed by suitably configuring the body portion **43,** flange **46,** cartridge **18,** mounting plate **32,** channel **24** or the abutment chamber **34** or any combination thereof. The dimension and/ or geometry of the body portion **43,** flange **46,** cartridge **18,** mounting plate **32,** channel **24** or the abutment chamber **34** may be suitably adapted to provide for the alignment gap **52.**

The alignment gap **52** may enable a radial movement of the first connector member **14** relative to the support member **12.** First connector member **14** may be radially displaced in a direction transverse to the longitudinal axis of the channel **24.** The magnitude of displacement of first connector member **14** may be dependent on the alignment gap **52.** During a radial displacement of first connector member **14** the angle between the central axis of the body portion **43** and the longitudinal axis of the channel **24** may remain constant.

The alignment gap **52** may enable a pivotal movement of the first connector member **14** relative to the support member **12.** First connector member **14** may be pivotably displaced at an angle relative to the longitudinal axis of the channel **24.** The magnitude of displacement of first connector member **14** may be dependent on the alignment gap **52.** During a pivotal displacement of first connector member **14** the angle between the central axis of the body portion **43** and the longitudinal axis of the channel **24** may vary.

The alignment gap **52** may enable a combined pivotal and radial movement of the first connector member **14** relative to the support member **12.** First connector member **14** may be displaced at an angle relative to the longitudinal axis of the channel **24** and may be displaced in a direction transverse to the longitudinal axis of the channel **24.** The magnitude of a combined pivotal and radial displacement of first connector member **14** may be dependent on the alignment gap **52.** During a combined pivotal and radial displacement of first connector member **14** the angle between the central axis of the body portion **43** and the longitudinal axis of the channel **24** may vary.

The body portion **43** of the fluidconnector sleeve **42** may be partly accommodated in the channel **24** and partly in the abutment chamber **34** of the mounting plate **32.** The movement of the body portion **43** in the support member **12** may be restricted by the enclosing wall of the **channel 24.**

The flange portion **46** may be accommodated in the abutment chamber **34.** The movement of the flange portion **46** in the support member **12** may be restricted by the abutment edge **28** of the cartridge **18** and the enclosing wall of the abutment chamber **34** and the abutment ledge **37.**

In the fluid coupler **10,** the bevelled edge **50** of the body portion **43** and the inclined edge **26** of the channel **24** may have an angular spacing of about 20° ― 30°.

The piston member **16** may comprise a piston conduit **53.** The piston conduit **53** may form a through fluid passage and may be centrally positioned in the piston member **16.** The piston conduit **53** may have an opening at a piston thrust surface **54** and an opening at a piston surface **55.** The piston thrust surface **54** and the piston surface **55** may be mutually opposite and parallel. Between and substantially perpendicular to the piston thrust surface **54** and the piston surface **55** may be a piston guide **56.**

The piston guide **56** may have a piston inclined edge **57** adjacent to the piston surface **55.** The piston inclined edge **57** may be formed as a ring around the piston member **16.**

In an embodiment, the piston guide **56** may have a further inclined edge adjacent to the piston thrust surface **54.** This further inclined edge may be formed as a ring around the piston member **16.**

In an embodiment, the piston guide **56** may comprise a piston groove **58.** The piston groove **58** may be cut into the piston guide **56.** The piston groove **58** may be positioned at the piston guide **56** such that a side has an opening piston guide **56.** The piston groove **58** may be disposed at any position along the piston guide **56** which may engage guide **38.**

In the fluid coupler **10,** the piston member **16** may be mounted in the support member **12,** within the enclosing wall of the fluid chamber **36** of the mounting plate **32.** The piston member **16** may be slidably engaged to the enclosing wall of the fluid chamber **36** and may move in an axial direction parallel to the longitudinal axis of the cavity in the mounting plate **32.** The guide 38 may engage to the piston guide **56.**

The guide **38** and the piston guide **56** are configured to enable the piston member **16** to axially slide in the mounting plate **32.** The dimension and/ or geometry of the guide **38** and the piston guide **56** are suitably adapted to allow piston member **16** to axially slide in the mounting plate **32.**

In the fluid coupler **10,** the piston member **16** may be positioned between the thrust surface **49** of the first fluidconnector member **14** and the fluid chamber ledge **39.** The axial movement of the piston member **16** may be restricted. In a direction, the piston member **16** may be restricted by the fluid chamber ledge **39** contacting the piston surface **55.** In the opposite direction, the piston member **16** may be restricted by piston thrust surface **54** contacting the thrust surface **49** of the first fluid connector **14** when the abutment seat **48** abuts the abutment edge **28** of the cartridge **18.**

In an embodiment, the piston member **16** may also be pivotable relative to the mounting plate **32.** The guide **38** and the piston guide **56** may be configured to enable the piston member **16** to pivot in the mounting plate **32.** The dimension and/ or geometry of the guide **38** and the piston guide **56** may be suitably adapted to allow piston member **16** to pivot in the mounting plate **32.**

In the fluid coupler **10,** the piston member **16** may be actuatable under fluid pressure to slide axially in the guide **38** toward first connector member **14.** The piston member **16** pushes the first connector member **14** into abutting engagement with the cartridge **18** of the support member **12.**

The piston member **16** may eliminate the need to connect a fluid hose directly to the first connector member **14** thereby eliminating any reaction forces that may be introduced by the fluid hoses.

In the fluid coupler **10,** the fluid passage **35,** conduit **47** and the piston conduit **53** may have the same diameters.

The fluid coupler **10** may comprise a compressible element **60** positioned in the groove **30.** The compressible element **60** may be positioned between the cartridge **18** of the support member **12** and the body portion **43** of the first connector member **14.** The compressible element **60** may be a flexible ring. The compressible element **60** may be made from a compressive material such as nitrile rubber or polyurethane.

In an embodiment, the fluid coupler **10** may comprise a plurality of compressible elements **60** positioned in a plurality of grooves **30.**

The compressible element **60** may return the first connector member **14** to a neutral position after disengagement from a second connector member. The compressible element **60** may return the first connector member **14** to the neutral position after disengagement of the fluidconnector **40** and a corresponding fluidconnector. The neutral position of first connector member **14** may be the position prior to engagement of the fluidconnector **40** and a corresponding fluidconnector.

The fluid coupler **10** may comprise a thrust seal **62** positioned in the slot **51.** The compression of the thrust seal **62** may be positioned between the body portion **43** of the first connector member **14** and the piston thrust surface **54.** A movement of piston thrust surface **54** against the thrust surface **49** of the first connector member **14** may compress the thrust seal **62.** The thrust seal **62** may ensure that a fluid does not leak from between the piston member **16** and the first connector member **14** into the abutment chamber **34.** In an embodiment, the thrust seal **62** may be an O-ring.

The fluid coupler **10** may comprise a piston seal **64** positioned in the piston groove **58.** The piston seal **64** may be positioned between the guide **38** and the piston member **16.** The piston seal **64** may ensure that a fluid does not leak from between the piston member **16** and the guide **38** into the abutment chamber **34.**

In an embodiment, the piston seal **64** may also be configured to allow a pivotal movement of the piston member **16.**

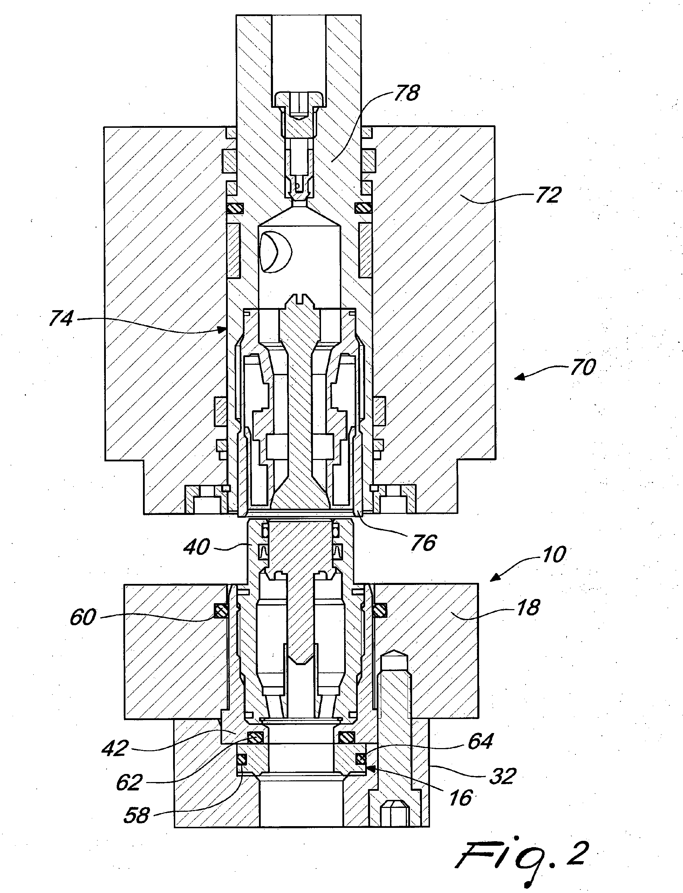

Fig. 2 illustrates a fluid coupler **10** aligned to a corresponding fluid coupler **70.** The corresponding fluid coupler **70** may comprise a corresponding cartridge **72** and a second fluidconnector member **74.** The second fluidconnector member **74** may comprise a corresponding fluidconnector **76** and a sliding sleeve **78.**

Fluidconnector **40** may be suitably formed to engage with the corresponding fluidconnector **76.** The fluidconnector **40** and the corresponding fluidconnector **76** may be configured for detachable reciprocal engagement. The engagement surfaces of the fluidconnector **40** and corresponding fluidconnector **76** may be formed to allow efficient engagement and disengagement in a direction substantially parallel to the longitudinal axes of the fluidconnector **40** and corresponding fluidconnector **76.** In an embodiment, the fluidconnector **40** may be a male fluidconnector while corresponding fluidconnector **76** may be a female fluidconnector. In an alternative embodiment, the fluidconnector **40** may be a female fluidconnector while corresponding fluidconnector **76** may be a male fluidconnector.

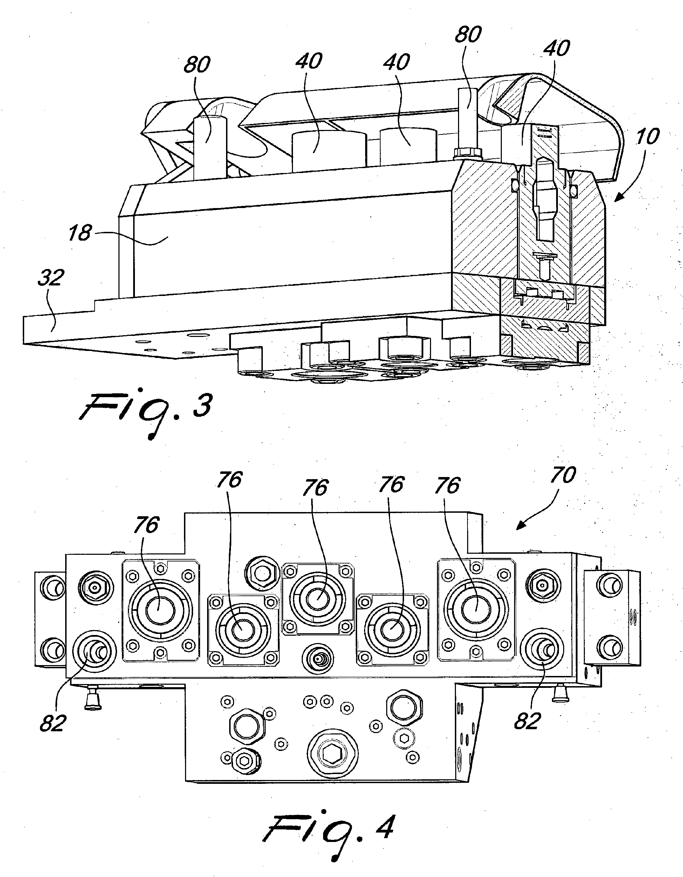

Fig. 3 illustrates a fluid coupler **10** which may comprise a support member **12,** a plurality of first connector members **14** and a plurality of piston members **16.** The fluid coupler **10** may further comprise guiding pins **80.** In an embodiment, the fluid coupler **10** may be mounted in a mounting bracket for engagement to corresponding fluid coupler **70.**

Fig. 4 illustrates the corresponding coupler **70** which may have a corresponding cartridge **72** and a plurality of second fluidconnector members **74** and a plurality of corresponding fluidconnectors **76.** The corresponding fluid coupler **70** may further comprise guiding bushings **82.** In an embodiment, the corresponding fluid coupler **70** may be mounted in a quick coupler for engagement to the fluid coupler **10.**

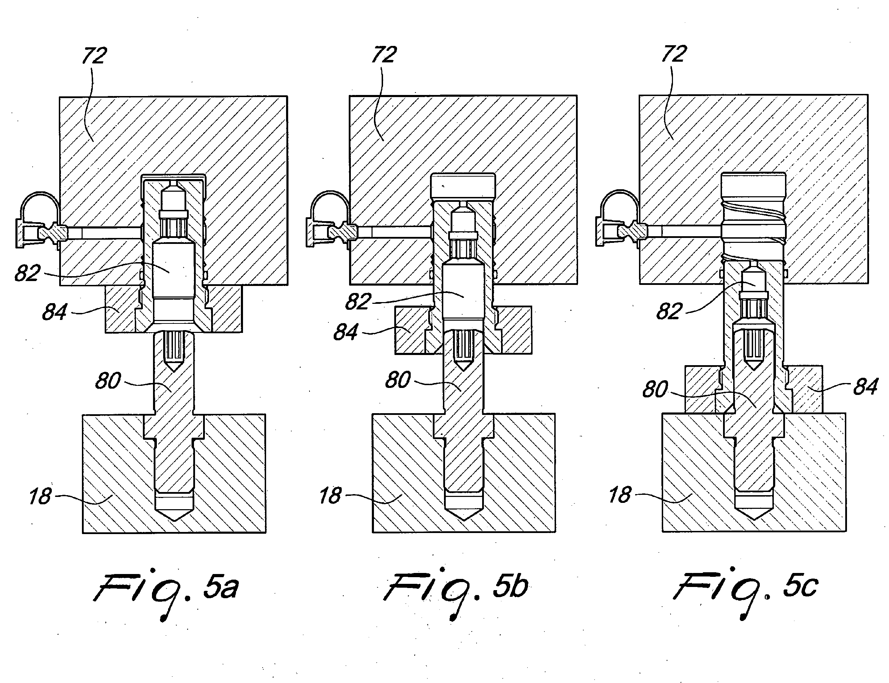

Figs. 5a ― 5c illustrate the guiding pin **80** of a fluid coupler **10** and the guiding bushing **82** of the corresponding coupler **70** at various stages of engagement. In Fig. 5a, the guiding pin **80** and guiding bushing **82** may be aligned when the fluid coupler **10** is mounted in a mounting bracket and the corresponding fluid coupler **70** is mounted in a quick coupler. In Fig. 5b, the guiding pin **80** and guiding bushing **82** may initiate engagement. In Fig. 5c, the guiding pin **80** and guiding bushing **82** may be engaged. In an embodiment, the first connector member **14** and the second connector member **74** may initiate engagement after the guiding pin **80** and guiding bushing **82** may be engaged.

In an embodiment, the fluid coupler **10** may be mounted in a mounting bracket and the corresponding fluid coupler **70** may be mounted in a quick coupler for a reciprocal engagement. There may be a rough alignment between the quickcoupler and mounting bracket. The quickcoupler and mounting bracket may be locked after being positioned correctly by means of a locking member.

After the connection between quickcoupler and mounting bracket is locked, the corresponding mounting plate **84** with the second connector members **74** may move towards the first connector members **14.** The guiding pins **80** on the fluid coupler **10** may align with the guiding bushing **82** in the corresponding coupler **70** and may initiate engagement. After engagement of the guiding pins **80** and the guiding bushing **82** the engagement of the first and second connector members **14, 74** may commence.

A method of aligned engagement of a fluidconnector **40** and a corresponding fluidconnector **76,** according to the present disclosure, may involve providing a floating first connector member **14** housed in a support member **12,** engaging the first connector member **14** to a second connector member **74,** and pressurising a fluid circuit to axially slide a piston member **16** in the support member **12.**

During engagement of the first connector member **14** to the second connector member **74,** the first connector member **14** may be radially and/or pivotably displaced. The radial and/or pivotal displacement of the first connector member **14** may allow for a smooth and efficient engagement of the first connector member **14** to the second connector member **74.**

In an embodiment, during engagement of the first connector member **14** to the second connector member **74,** the piston member **16** may also be pivotally displaced. The piston member **16** may be pivotally displaced in unison with a pivotal displacement of the first connector member **14.** The pivotal displacement of the piston member **16** may allow for the thrust surface **49** of the first connector member **14** to remain in parallel with the piston thrust surface **54.**

During aligned engagement of the first connector member **14** to the second connector member **74** the fluid coupler is not under fluid pressure. After the engagement of the first connector member **14** to the second connector member **74** the fluid circuit is pressurised. The pressurised fluid may flow into the fluid chamber **36** through the fluid passage **35.**

The flow of pressurised fluid pushes the piston member **16** to slide axially in the guide **38.** The piston member **16** may be forced by the pressurised fluid into pushing contact with the first connector member **14.** The piston member **16** pushing on the first connector member **14** may compress a thrust seal **62** disposed between the piston member **16** and the first connector member **14.** The first connector member **14** may be pushed into abutting engagement with the cartridge **18** of the support member **12.** In this abutting engagement, the first connector member **14** may not be radially and/ or pivotably displaced. The first connector member **14** may be stably held against the cartridge **18** through the force of the pressurised fluid.

Prior to disengagement, the fluid circuit is depressurised which may allow the first connector member **14** to be radially and/ or pivotably displaced. Subsequently, the first connector member **14** and the second connector member **74** may be disengaged. The compressible element **60** may return the first connector member **14** to a neutral position after disengagement from the second connector member **74.**

The skilled person would realise that foregoing embodiments may be modified to obtain the fluid coupler **10** of the present disclosure.

### Industrial Applicability

This disclosure describes a fluid coupler **10** for aligning male and female fluidconnectors during reciprocal engagement. The fluid coupler **10** may align hydraulic fluidconnectors with high accuracy during engagement. The fluid coupler **10** may allow alignment of fluidconnectors in order to establish a reliable and leak free connection.

Depending on the misalignment of the fluidconnectors, the first connector member **14** carrying a fluidconnector **40** may be radially displaced in any direction and/or pivotably displaced. This may allow the fluidconnector **40** and the corresponding fluidconnector to engage smoothly so as to reduced potential wear.

During engagement and disengagement, the first connector member **14** may be separated from the hydraulic hose entry ports as the fluid circuit is depressurized.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A fluid coupler (10) for aligned engagement of fluid connectors (40, 76), the fluid coupler (10) comprising:
a support member (12), **characterised in that** the fluid coupler further comprises
a floating first connector member (14) housed in the support member (12) and engageable to a second connector member (74); and
a piston member (16) axially slidable in the support member (12) towards the first connector member (14), wherein the piston member (16) is actuatable to push the first connector member (14) into abutting engagement with the support member (12) such that the first connector member (14) is not radially and/ or pivotally displaceable relative to the support member (12).

2. The fluid coupler (10) of claim 1 comprising an alignment gap (52) between the support member (12) and the first connector member (14) for floating movement of the first connector member (14).

3. The fluid coupler (10) of claim 1 or 2 wherein the first connector member (14) is radially movable relative to the support member (12).

4. The fluid coupler (10) of claim 1, 2 or 3 wherein the first connector member (14) is pivotally movable relative to the support member (12).

5. The fluid coupler (10) of any of the preceding claims comprising a compressible element (60) positioned between the support member (12) and the first connector member (14) to return the first connector member (14) to a neutral position after disengagement from the second connector member (74).

6. The fluid coupler (10) of any of the preceding claims wherein the first connector member (14) includes the fluidconnector (40) mounted in a fluidconnector sleeve (42).

7. The fluid coupler (10) of any of the preceding claims wherein the piston member (16) is pivotable in the support member (12).

8. The fluid coupler (10) of claim 7 comprises a piston seal (64) positioned between the piston member (16) and the support member (12) and configured for pivotal movement of the piston member (16).

9. The fluid coupler (10) of any of the preceding claims comprising a thrust seal (62) . disposed between the piston member (16) and the first connector member (14).

10. The fluid coupler (10) of any of the preceding claims wherein the support member (12) includes a mounting plate (32) connected to a fluid connector cartridge (18).

11. A method of aligned engagement of fluid connectors (40, 76), the method **characterised by** the steps of:
housing a floating first connector member (14) in a support member (12);
engaging the first connector member (14) to a second connector member (74);
pressurizing a fluid circuit to axially slide a piston member (16) in the support member (12) toward the first connector member (14); and
pushing the first connector member (14) into abutting engagement with the support member (12) such that the first connector member (14) is not radially and/ or pivotally displaceable relative to the support member (12).

12. The method of claim 11 wherein the first connector member (14) is radially or pivotably movable at engagement of the first connector member (14) to the second connector member (74).

13. The method of claim 11 or 12 wherein the piston member (16) is pivotally movable at engagement of the first connector member (14) to the second connector member (74).

14. The method of claim 11 wherein the piston member (16) pushing the first connector member (14) compresses a thrust seal (62) disposed between the piston member (16) and the first connector member (14).

## Patentansprüche

1. Ein Fluidkoppler (10) für den ausgerichteten Eingriff von Fluid-Verbindungsstücken (40, 76), wobei der Fluidkoppler (10) Folgendes umfasst:
ein tragendes Glied (12), **dadurch gekennzeichnet, dass** der Fluidkoppler weiter Folgendes umfasst:
ein schwimmendes erstes Verbindungsglied (14), untergebracht im tragenden Glied (12), das mit einem zweiten Verbindungsglied (74) eingreifen kann; und
ein Kolbenglied (16), das im tragenden Glied (12) zum ersten Verbindungsglied (14) hin axial verschiebbar ist, wobei das Kolbenglied (16) betätigt werden kann, um das erste Verbindungsglied (14) in einen anschlagenden Eingriff mit dem tragenden Glied (12) zu schieben, so dass das erste Verbindungsglied (14) nicht radial und/oder drehgelenkig im Verhältnis zum tragenden Glied (12) verschiebbar ist.

2. Der Fluidkoppler (10) gemäß Anspruch 1, der eine Ausrichtungslücke (52) zwischen dem tragenden Glied (12) und dem ersten Verbindungsglied (14) umfasst, zum Zwecke einer flüssigen Bewegung des ersten Verbindungsglieds (14).

3. Der Fluidkoppler (10) gemäß Anspruch 1 oder 2, wobei das erste Verbindungsglied (14) relativ zum tragenden Glied (12) radial beweglich ist.

4. Der Fluidkoppler (10) gemäß Anspruch 1, 2 oder 3, wobei das erste Verbindungsglied (14) relativ zum tragenden Glied (12) drehgelenkig beweglich ist.

5. Der Fluidkoppler (10) gemäß einem beliebigen der obigen Ansprüche, der ein komprimierbares Element (60) umfasst, positioniert zwischen dem tragenden Glied (12) und dem ersten Verbindungsglied (14), um das erste Verbindungsglied (14) nach Lösen vom zweiten Verbindungsglied (74) in eine neutrale Position zurückzustellen.

6. Der Fluidkoppler (10) gemäß einem beliebigen der obigen Ansprüche, wobei das erste Verbindungsglied (14) das Fluid-Verbindungsstück (40)einschließt, das in eine Fluid-Verbindungshülse (42) montiert ist.

7. Der Fluidkoppler (10) gemäß einem beliebigen der obigen Ansprüche, wobei das Kolbenglied (16) im tragenden Glied (12) schwenkbar ist.

8. Der Fluidkoppler (10) gemäß Anspruch 7 umfasst eine Kolbendichtung (64), positioniert zwischen dem Kolbenglied (16) und dem tragenden Glied (12) und ausgebildet für eine Drehbewegung des Kolbenglieds (16).

9. Der Fluidkoppler (10) gemäß einem beliebigen der obigen Ansprüche, der eine Längsdruck-Dichtung (62) umfasst, angeordnet zwischen dem Kolbenglied (16) und dem ersten Verbindungsglied (14).

10. Der Fluidkoppler (10) gemäß einem beliebigen der obigen Ansprüche, wobei das tragende Glied (12) eine Montageplatte (32) einschließt, die mit einer Fluid-Verbindungspatrone (18) verbunden ist.

11. Ein Verfahren für ein ausgerichtetes Eingreifen von Fluid-Verbindungsstücken (40, 76), wobei das Verfahren durch folgende Schritte gekennzeichnet ist:
Unterbringung eines schwimmenden ersten Verbindungsglieds (14) in einem tragenden Glied (12);
Eingreiffenlassen des ersten Verbindungsglieds (14) mit einem zweiten Verbindungsglied (74);
Unter-Druck-Setzen eines Fluidkreislaufs, um ein Kolbenglied (16) im tragenden Glied (12) axial zum ersten Verbindungsglied (14) hin zu verschieben; und
Schieben des ersten Verbindungsglieds (14) bis zu einem anschlagenden Eingriff mit dem tragenden Glied (12), so dass das erste Verbindungsglied (14) nicht radial und/oder drehgelenkig im Verhältnis zum tragenden Glied (12) verschiebbar ist.

12. Das Verfahren gemäß Anspruch 11, wobei das erste Verbindungsglied (14) bei Eingriff des ersten Verbindungsglieds (14) mit dem zweiten Verbindungsglied (74) radial oder drehgelenkig beweglich ist.

13. Das Verfahren gemäß Anspruch 11 oder 12, wobei das Kolbenglied (16) bei Eingriff des ersten Verbindungsglieds (14) mit dem zweiten Verbindungsglied (74) drehgelenkig beweglich ist.

14. Das Verfahren gemäß Anspruch 11, wobei das Kolbenglied (16), das das erste Verbindungsglied (14) schiebt, eine Längsdruck-Dichtung (62) zusammendrückt, die zwischen dem Kolbenglied (16) und dem ersten Verbindungsglied (14) angebracht ist.

## Revendications

1. Coupleur hydraulique (10) pour l'enclenchement aligné de raccords hydrauliques (40, 76), le coupleur hydraulique (10) comportant :
une pièce de soutien (12), le coupleur hydraulique étant **caractérisé en ce qu'**il comporte en outre
une première pièce de raccordement flottante (14) logée dans la pièce de soutien (12) et pouvant s'enclencher avec une seconde pièce de raccordement(74) ; et
une pièce formant piston (16) apte à coulisser axialement dans la pièce de soutien (12) vers la première pièce de raccordement (14), la pièce formant piston (16) étant actionnable pour pousser la première pièce de raccordement (14) jusqu'à ce qu'elle vienne en butée contre la pièce de soutien (12) de façon que la première pièce de raccordement (14) ne puisse pas bouger radialement ni pivoter par rapport à la pièce de soutien (12).

2. Coupleur hydraulique (10) selon la revendication 1, comportant un intervalle d'alignement (52) entre la pièce de support (12) et la première pièce de raccordement (14) pour permettre un mouvement flottant de la première pièce de raccordement (14).

3. Coupleur hydraulique (10) selon la revendication 1 ou 2, dans lequel la première pièce de raccordement (14) est mobile radialement par rapport à la pièce de soutien (12).

4. Coupleur hydraulique (10) selon la revendication 1, 2 ou 3, dans lequel la première pièce de raccordement (14) peut pivoter par rapport à la pièce de soutien (12).

5. Coupleur hydraulique (10) selon l'une quelconque des revendications précédentes, comportant un élément compressible (60) placé entre la pièce de support (12) et la première pièce de raccordement (14) pour faire revenir la première pièce de raccordement (14) en position neutre après qu'elle s'est dégagée de la seconde pièce de raccordement (74).

6. Coupleur hydraulique (10) selon l'une quelconque des revendications précédentes, dans lequel la première pièce de raccordement (14) comprend le raccord hydraulique (40) monté dans une douille (42) de raccord hydraulique.

7. Coupleur hydraulique (10) selon l'une quelconque des revendications précédentes, dans lequel la pièce formant piston (16) est apte à pivoter dans la pièce de soutien (12).

8. Coupleur hydraulique (10) selon la revendication 7, comportant un joint d'étanchéité (64) de piston placé entre la pièce formant piston (16) et la pièce de soutien (12) et conçu pour permettre le pivotement de la pièce formant piston (16).

9. Coupleur hydraulique (10) selon l'une quelconque des revendications précédentes, comportant un joint d'étanchéité d'appui (62) disposé entre la pièce formant piston (16) et la première pièce de raccordement (14).

10. Coupleur hydraulique (10) selon l'une quelconque des revendications précédentes, dans lequel la pièce de soutien (12) comprend une plaque de support (32) montée sur une cartouche (18) de raccord hydraulique.

11. Procédé pour enclencher des raccords hydrauliques (40, 76) avec un bon alignement, le procédé étant **caractérisé par** les étapes de :
introduction d'une première pièce de raccordement (14) dans une pièce de soutien (12) ;
enclenchement de la première pièce de raccordement (14) avec une seconde pièce de raccordement (74) ;
mise sous pression d'un circuit hydraulique pour faire coulisser axialement une pièce formant piston (16) dans la pièce de soutien (12) vers la première pièce de raccordement (14) ; et
poussée sur la première pièce de raccordement (14) jusqu'à ce qu'elle vienne en butée contre la pièce de soutien (12) de façon que la première pièce de raccordement (14) ne puisse pas bouger radialement ni pivoter par rapport à la pièce de soutien (12).

12. Procédé selon la revendication 11, dans lequel la première pièce de raccordement (14) peut bouger radialement ou pivoter lorsque la première pièce de raccordement (14) s'enclenche avec la seconde pièce de raccordement (74).

13. Procédé selon la revendication 11 ou 12, dans lequel la pièce formant piston (16) est apte à pivoter lorsque la première pièce de raccordement (14) s'enclenche avec la seconde pièce de raccordement (74).

14. Procédé selon la revendication 11, dans lequel la pièce formant piston (16) poussant la première pièce de raccordement (14) comprime un joint d'étanchéité d'appui (62) disposé entre la pièce formant piston (16) et la première pièce de raccordement (14).
